(19) Europäisches Patentamt
European Patent Office
Office européen des brevets

(11) EP 1 528 957 B1

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(21) Anmeldenummer: **03784037.8**

(22) Anmeldetag: **22.07.2003**

(51) Int Cl.[7]: **B03D 1/014**, B03D 1/012, B03D 1/01, C07F 9/24

(86) Internationale Anmeldenummer:
**PCT/EP2003/007966**

(87) Internationale Veröffentlichungsnummer:
**WO 2004/014562 (19.02.2004 Gazette 2004/08)**

(54) **VERWENDUNG EINES SAMMLERS FÜR SULFIDISCHE ERZE UND VERFAHREN ZU SEINER HERSTELLUNG**

USE OF A COLLECTING AGENT FOR SULPHIDIC ORES AND METHOD OF ITS PRODUCTION

UTILISATION D'UN COLLECTEUR POUR MINERAIS SULFURES ET LA METHODE POUR SA PRODUCTION

(84) Benannte Vertragsstaaten:
**AT BE CH CY DE DK ES FI FR GB GR IE IT LI LU MC NL PT SE**

(30) Priorität: **03.08.2002 DE 10235574**
**12.11.2002 DE 10252451**

(43) Veröffentlichungstag der Anmeldung:
**11.05.2005 Patentblatt 2005/19**

(73) Patentinhaber: **Clariant GmbH**
**65929 Frankfurt am Main (DE)**

(72) Erfinder:
- **RAU, Tobias**
  **55130 Mainz (DE)**
- **HESSE, Heinrich**
  **65795 Hattersheim (DE)**
- **BUCH, Wolfgang**
  **60529 Frankfurt (DE)**
- **GOMEZ, Jaime**
  **Santiago de Chile (CL)**
- **ARENDS, Miguel, Angel**
  **Santiago de Chile (CL)**
- **ERNSTORFER, Norbert**
  **Santiago de Chile (CL)**

(74) Vertreter: **Mikulecky, Klaus et al**
**Clariant Service GmbH**
**Patente, Marken, Lizenzen**
**Am Unisys-Park 1**
**65843 Sulzbach/Ts. (DE)**

(56) Entgegenhaltungen:
**DE-A- 3 629 269** **DE-A- 4 040 475**
**US-A- 4 822 483**

- **KLEE, F.C.; KIRCH, E.R.: "Thiophosphoric Acid Derivatives of Ethylamine, D,L-Methionine, and L-Proline Ethyl Esters" JOURNAL OF PHARMACEUTICAL SCIENCE, Bd. 51, 1962, Seiten 423-427, XP009020165**
- **DATABASE CROSSFIRE BEILSTEIN [Online] Beilstein Institut zur Förderung der Chemischen Wissenschaften, Frankfurt am Main, DE; Database accession no. Reaction IDs 183831; 662317; 72722; 68756; 854051 XP002264353 & HU, CHEN: HUAXUE XUEBAO, Bd. 22, 1956, Seite 219**
- **DATABASE CROSSFIRE BEILSTEIN [Online] Beilstein Institut zur Förderung der Chemischen Wissenschaften, Frankfurt am Main, DE; Database accession no. Reaction IDs 1165436; 1222107; 1222083; 895279 XP002264354 & KHASKIN, B. A. ET AL.: J. GEN CHEM. USSR, Bd. 43, 1973, Seite 1901**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft die Verwendung von Alkylamidothiophosphorsäure-dialkylestern in der flotativen Aufbereitung von sulfidischen Erzen, sowie ein Verfahren für deren Herstellung.

Bei der flotativen Gewinnung von sulfidischen Erzen und Kupfer-/Molybdänerzen werden kommerziell verschiedene Sammlertypen, wie Dithiophosphate, Xanthate, Xanthogenformiate und Thionocarbamate (Schubert: Aufbereitung fester mineralischer Rohstoffe, Band II, 1977, S. 296 ff) sowie deren Mischungen in Kombination mit Schäumern eingesetzt. Durch den Prozess der Flotation werden die Kupfer- und Molybdänsulfide von Gangmineralien getrennt.

Sammler bewirken eine Benetzung der Oberfläche des Wertminerals, welche zu einer Hydrophobierung der Partikel führt. Durch Eindüsung von Luft in die wässrige Flotationstrübe werden Luftblasen erzeugt, zu denen die hydrophobierten Erzpartikel eine hohe Affinität aufweisen, und mit den Luftblasen zur Oberfläche der Flotationstrübe ausgetragen werden, während Gangmineralien in der Trübe verbleiben. Zu den handelsüblichen Schäumern gehören zum Beispiel Alkohole, Propylenglykole sowie deren Ether und MIBC (Methylisobutylcarbinol).

US-4 699 711 offenbart ein Verfahren zur Flotation von Sulfidmineralien mit vorzugsweise kurzkettigen alkylsubstituierten Thionocarbamaten.

WO-02/38277 offenbart die Verwendung von Mischungen aus Thionocarbamaten und Mercaptobenzthiazolen als Sammler für die Flotation sulfidischer Erze, insbesondere Kupfererz, das mit Molybdän und Gold assoziiert ist.

Klee, F.C., Kirch, E. R., J. Pharm. Sci., 51, 1962, 423-427 offenbart ein Verfahren zur Herstellung von Alkylamidothiophosphorsäuredialkylestern durch Reaktion von $PCl_2SN(C_2H_4)$ mit NaOiBu in absolutiertem Diethylether unter Zusatz von Natrium- bzw. Kaliummetall.

Aufgabe vorliegender Erfindung war es, einen verbesserten Sammlertyp für sulfidisches Kupfer und Kupfer-/Molybdänerze aufzufinden, der bessere Flotationsergebnisse als Sammler des Standes der Technik aufweist.
Es wurde gefunden, dass Alkylamidothiophosphorsäuredialkylester, insbesondere der Ethylamidothiophosphorsäuredüsobutylester, ein deutlich höheres Ausbringen bei gleichem Kupfer-/Molybdängehalt bewirken. Die Aufgabe vorliegender Erfindung bestand ferner darin, ein verbessertes Verfahren zur Herstellung von Alkylamidothiophosphorsäuredialkylestern zu finden. Es sollte insbesondere von leichter zugänglichen Edukten ausgehen und ohne absolutierte Lösungsmittel sowie ohne Alkalimetalle auskommen.

Gegenstand der Erfindung ist somit die Verwendung eines Mittels zur Flotation von sulfidischen Erzen, enthaltend mindestens eine Verbindung der Formel

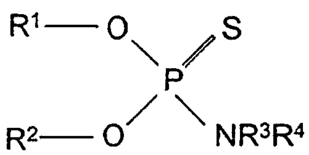

worin
$R^1$, $R^2$ und $R^3$ unabhängig voneinander für Alkylgruppen mit 1 bis 18 Kohlenstoffatomen, Alkenylgruppen mit 2 bis 18 Kohlenstoffatomen, Arylgruppen mit 6 bis 10 Kohlenstoffatomen oder Alkylarylgruppen mit 7 bis 10 Kohlenstoffatomen, und
$R^4$ für Wasserstoff oder Alkylgruppen mit 1 bis 18 Kohlenstoffatomen, Alkenylgruppen mit 2 bis 18 Kohlenstoffatomen, Arylgruppen mit 6 bis 10 Kohlenstoffatomen oder Alkylarylgruppen mit 7 bis 10 Kohlenstoffatomen stehen.

Ein weiterer Gegenstand der Erfindung ist ein Verfahren zur Herstellung von Verbindungen der Formel

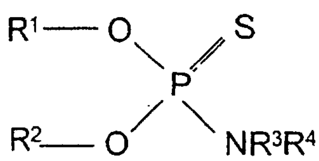

worin
$R^1$, $R^2$, und $R^3$ unabhängig voneinander für Alkylgruppen mit 1 bis 18 Kohlenstoffatomen, Alkenylgruppen mit 2 bis

18 Kohlenstoffatomen, Arylgruppen mit 6 bis 10 Kohlenstoffatomen oder Alkylarylgruppen mit 7 bis 10 Kohlenstoffatomen stehen, und
$R^4$ für Wasserstoff oder Alkylgruppen mit 1 bis 18 Kohlenstoffatomen, Alkenylgruppen mit 2 bis 18 Kohlenstoffatomen, Arylgruppen mit 6 bis 10 Kohlenstoffatomen oder Alkylarylgruppen mit 7 bis 10 Kohlenstoffatomen steht, durch

a) Reaktion eines Dithiophosphats der Formel $(R^1O)$ $(R^2O)PS_2Me$, worin Me für ein Kation steht, mit einem Oxidationsmittel in saurer Lösung und anschließend

b) Reaktion des so erhaltenen Produkts mit einem Amin der Formel $HNR^3R^4$.

Bei der erfindungsgemäßen Verwendung können bei der Flotation von Nicht-Fe-Metallsulfiden im Vergleich zu Standardsammlern verbesserte Resultate bei Selektivität und Ausbeute erreicht werden.

Vorzugsweise stehen $R^1$, $R^2$, $R^3$ und $R^4$ unabhängig voneinander für Alkyl- oder Alkenylgruppen mit 1 bis 10 Kohlenstoffatomen. Beispielhaft stehen $R^1$, $R^2$ und $R^3$ unabhängig voneinander für $C_2$- bis $C_4$-Alkylgruppen. Besonders bevorzugt stehen $R^1$ und $R^2$ für einen Butylrest, insbesondere einen Isobutylrest. $R^3$ steht insbesondere für einen Ethylrest. $R^4$ steht insbesondere für Wasserstoff.

Me steht vorzugsweise für ein Alkalimetall, Erdalkalimetall, Ammoniumion oder Wasserstoffion, insbesondere für Na oder K.

Als Oxidationsmittel kommt jedes in Betracht, das zur Oxidation des Dithiophosphats in der Lage ist, beispielsweise ein Chlorit, wie etwa Natriumchlorit, Hypochlorit oder Chlorat.

Als Säure kommt jede Verbindung in Betracht, die in wässriger Lösung Wasserstoffionen abspaltet. Vorzugsweise handelt es sich um Mineralsäuren wie beispielsweise Schwefelsäure, Salpetersäure, Phosphorsäure oder Salzsäure. Gegebenenfalls kann die Säure eine oxidierende Säure sein, die gleichzeitig als Oxidationsmittel wirkt.

Bevorzugte Dithiophosphate sind Diisobutyldithiophosphat, Diethyldithiophosphat, Diisopropyldithiophosphat, Di-sec-butyldithiophosphat und Diamyldithiophosphat.

Flotiert werden können alle Metallsulfide (außer Fe), wobei Cu, Mo, Pb, Zn, und Ni besonders bevorzugt sind. Besonders gute Ergebnisse sind bei der Aufbereitung von Cu und Mo zu beobachten. Das erfindungsgemäße Flotationsreagenz ist in einem weiten pH Bereich anwendbar (2 bis 12) und wird der wässrigen Trübe in einer Konzentration zwischen vorzugsweise 0,001 und 1,0 kg/Tonne Roherz zugesetzt.

Mit der erfindungsgemäßen Verwendung wird gegenüber den Xanthogenformiaten und Thionocarbamaten des Standes der Technik eine signifikante Verbesserung von Ausbringen und Selektivität erreicht. Die Beispiele 1, 3 und 5 zeigen deutlich, dass das Ausbringen an Kupfer und Molybdän höher ist als mit dem entsprechenden Standardreagenz. Hervorzuheben ist Beispiel 3, in dem mit 77,3 % Kupfer- und 69,5 % Molybdänausbringen um 4,8 und 7,1 % deutlich höhere Werte erzielt werden als mit der entsprechenden Menge an Ethylisopropylhionocarbamat {Beispiel 4(V)}, wobei der Kupfer- bzw. Molybdängehalt auf gleichem Niveau bleibt.

Beispiele

A) Herstellung von Ethylamidothiophosphorsäurediisobutylester:

Stufe 1 (Oxidation):

$$4(RO)_2PS_2Na + NaClO_2 + 2H_2SO_4$$

$$\rightarrow 2(RO)_2PSS\text{-}SSP(OR)_2 + NaCl + H_2O + 2Na_2SO_4$$

R = $C_4H_9$-Isobutyl

Stufe 2 Amidierung:

2a) $$(RO)_2PS\text{-}S\text{-}S\text{-}SP(OR)_2 + 2H_2NCH_2CH_3 \rightarrow 2(RO)_2PSNHR_{(aq)} + H_2S_{2(liq\ aq)}$$

2b) $H_2S_2 + H_2NR \rightarrow (RNH_3)HS_{2(liq\ aq)}$

Zur Herstellung von Ethylamidothiophosphorsäurediisobutylester wurden 1670 g (3,17 mol) einer 50 %igen wässrigen Lösung von Natriumdiisobutyldithiophosphat mit 725 g einer 22 %igen Natriumchloritlösung (1,76 mol) 5 min homogenisiert. Unter ständigem Rühren wurden 346 g 50 %ige Schwefelsäure langsam über 2-3 h zudosiert, wobei die Temperatur der Reaktionsmischung zwischen 40 und 50°C gehalten wurde. Es wurde weitere 30 min gerührt und die Reaktionsmischung anschließend auf 30-40°C abgekühlt.
Nach Trennung der Phasen wurde die organische Phase (ca. 778 g) dekantiert und mit 250 g einer 70 %igen Ethylaminlösung umgesetzt, welche über ca. 2-3 h langsam zudosiert wurde. Die Temperatur wurde durch Kühlung (exotherme Reaktion) bei 40-60°C gehalten. Anschließend wurde die Reaktionsmischung ca. 3 h unter Rückfluss bei 70-80°C erhitzt.
Unter Rühren wurde die Reaktionsmischung auf 40-50°C abgekühlt, und es wurden 441 g Diethylenglykol zugegeben. Nach weiteren 30 min wurde die Mischung auf 20-25°C abgekühlt. Die Konzentration der Reaktionsproduktes wurde mit 95 g Wasser auf dem gewünschten Wirkstoffgehalt eingestellt.
Nach Filtrieren erhielt man 1551 g einer transparenten rötlich-ölartigen Lösung des Produktes.

B) Wirkung als Sammler

Es wurden folgende Sammler/Schäumer-Kombinationen verwendet:

Tabelle 1:

| Sammler/Schäumer-Kombinationen | | |
|---|---|---|
| Beispiel Nr. | Zusammensetzung | |
| 1 | Sammler<br>Schäumer | Ethylamidothiophosphorsäurediisobutylester (27 g/t)<br>Oxo-Rückstand/ Polypropylenglykolmethylether, Mw = 400 g/mol (5:1, 15 g/t) |
| 2 (V) | Sammler<br>Schäumer | Ethylisopropylxanthogenformiat (27 g/t)<br>Oxo-Rückstand/Polypropylenglykolmethylether, Mw = 400 g/mol (5:1, 15 g/t) |
| 3 | Sammler<br>Schäumer | Ethylamidothiophosphorsäurediisobutylester (6 g/t)<br>Oxo-Rückstand/Polypropylenglykol, Mw = 425 g/mol (20 g/t) |
| 4 (V) | Sammler<br>Schäumer | Ethylisopropylthionocarbamat (6 g/t)<br>Propylenglykolmethylether, Mw = 250 g/mol/MIBC (1:1, 28 g/t) |
| 5 | Sammler<br>Schäumer | Ethylamidothiophosphorsäurediisobutylester (33 g/t)<br>Oxo-Rückstand/Polypropylenglykol, Mw = 425 g/mol (40 g/t) |
| 6 (V) | Sammler<br>Schäumer | Ethylisopropylxanthogenformiat (33 g/t)<br>Oxo-Rückstand/Pine Öl (6:4, 40 g/t) |

Oxo-Rückstände haben hier etwa die folgende Zusammensetzung:

| Bestandteil | Konzentrationsbereich (Gew.-%) |
|---|---|
| Di-2-ethylhexylether | 10 - 25 |
| 2-Ethylhexylsäure-2-ethylhexylester | 10 - 25 |
| $C_{16}$-Lactone | 4 - 20 |
| 2-Ethylhexylbutyrat | 3 - 10 |
| 2-Ethylhexandiol(1,3)-mono-n-butyrat | 5 - 15 |
| 2-Ethylhexanol | 4 - 10 |
| $C_4$- bis $C_8$-Acetale | 2 - 10 |
| 2-Ethylhexandiol-(1,3) | 2 - 5 |
| Ether und Ester $\geq C_{20}$ | 0 - 20 |

Tabelle 2:

| Ergebnisse der Flotationsversuche | | | | | | |
|---|---|---|---|---|---|---|
| | Aufgabe | | Konzentrat | | | |
| Beispiel Nr. | Cu-Gehalt in % | Mo-Gehalt in % | Cu-Gehalt in % | Mo-Gehalt in % | Ausbringen in % | Ausbringen in % |
| 1 | 1,13 | 0,03 | 11,4 | 0,25 | 92,1 | 80,3 |
| 2 (V) | | | 11,5 | 0,23 | 91,2 | 76,9 |
| 3 | 0,62 | 0,017 | 4,1 | 0,14 | 77,3 | 69,5 |
| 4 (V) | | | 4,3 | 0,15 | 72,5 | 62,4 |
| 5 | 0,83 | - | 10,3 | - | 89,2 | - |
| 6 (V) | | | 10,2 | - | 86,7 | - |

**Patentansprüche**

**1.** Verwendung eines Mittels zur Flotation von sulfidischen Erzen, enthaltend mindestens eine Verbindung der Formel

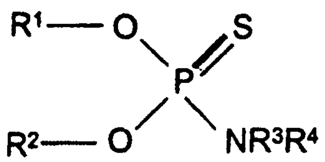

worin
$R^1$, $R^2$ und $R^3$ unabhängig voneinander für Alkylgruppen mit 1 bis 18 Kohlenstoffatomen, Alkenylgruppen mit 2 bis 18 Kohlenstoffatomen, Arylgruppen mit 6 bis 10 Kohlenstoffatomen oder Alkylarylgruppen mit 7 bis 10 Kohlenstoffatomen, und
$R^4$ für Wasserstoff oder Alkylgruppen mit 1 bis 18 Kohlenstoffatomen, Alkenylgruppen mit 2 bis 18 Kohlenstoffatomen, Arylgruppen mit 6 bis 10 Kohlenstoffatomen oder Alkylarylgruppen mit 7 bis 10 Kohlenstoffatomen stehen.

**2.** Verwendung des Flotationsmittels nach Anspruch 1, worin $R^1$, $R^2$ und $R^3$ unabhängig voneinander für $C_2$- bis $C_4$-Alkylgruppen stehen.

**3.** Verwendung des Flotationsmittels gemäß Anspruch 1 und/oder 2 in einem pH-Bereich von 2 bis 12.

**4.** Verwendung des Flotationsmittels gemäß Anspruch 1 und/oder 2 in Mengen von 0,001 bis 1,0 kg pro Tonne Roherz.

**5.** Verwendung des Flotationsmittels gemäß Anspruch 1 und/oder 2 bei der Flotation von nicht eisenhaltigen sulfidischen Erzen, wobei das sulfidische Erz Kupfersulfid, Nickelsulfid, Zinksulfid, Bleisulfid oder Molybdänsulfid ist.

**6.** Verfahren zur Herstellung von Verbindungen der Formel

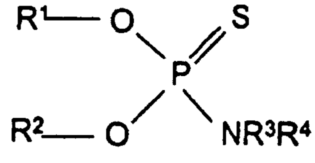

worin

$R^1$, $R^2$, und $R^3$ unabhängig voneinander für Alkylgruppen mit 1 bis 18 Kohlenstoffatomen, Alkenylgruppen mit 2 bis 18 Kohlenstoffatomen, Arylgruppen mit 6 bis 10 Kohlenstoffatomen oder Alkylarylgruppen mit 7 bis 10 Kohlenstoffatomen stehen, und
$R^4$ für Wasserstoff oder Alkylgruppen mit 1 bis 18 Kohlenstoffatomen, Alkenylgruppen mit 2 bis 18 Kohlenstoffatomen, Arylgruppen mit 6 bis 10 Kohlenstoffatomen oder Alkylarylgruppen mit 7 bis 10 Kohlenstoffatomen steht, durch

a) Reaktion eines Dithiophosphats der Formel $(R^1O)$ $(R^2O)PS_2Me$, worin Me für ein Kation steht, mit einem Oxidationsmittel in saurer Lösung und anschließend

b) Reaktion des so erhaltenen Produkts mit einem Amin der Formel $HNR^3R^4$.

**7.** Verfahren nach Anspruch 6, worin $R^1$, $R^2$ und $R^3$ unabhängig voneinander für $C_2$- bis $C_4$-Alkylgruppen stehen.

**8.** Verfahren nach Anspruch 7, worin $R^1$ und $R^2$ für einen Butylrest, $R^3$ für einen Ethylrest und $R^4$ für Wasserstoff stehen.

**9.** Verfahren nach Anspruch 8, worin $R^1$ und $R^2$ für einen Isobutylrest stehen.

## Claims

**1.** The use of a composition for the flotation of sulfide ores comprising at least one compound of the formula

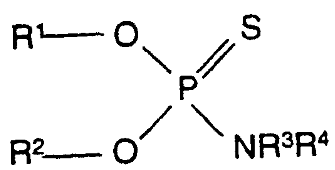

where
$R^1$, $R^2$ and $R^3$ independently of one another are alkyl groups having 1 to 18 carbon atoms, alkenyl groups having 2 to 18 carbon atoms, aryl groups having 6 to 10 carbon atoms, or alkylaryl groups having 7 to 10 carbon atoms, and
$R^4$ is hydrogen or alkyl groups having 1 to 18 carbon atoms, alkenyl groups having 2 to 18 carbon atoms, aryl groups having 6 to 10 carbon atoms, or alkylaryl groups having 7 to 10 carbon atoms.

**2.** The use of the flotation composition as claimed in claim 1, wherein $R^1$, $R^2$ and $R^3$ independently of one another are $C_2$-$C_4$-alkyl groups.

**3.** The use of the flotation composition as claimed in claim 1 and/or 2 in a pH range from 2 to 12.

**4.** The use of the flotation composition as claimed in claim 1 and/or 2 in amounts of 0.001 to 1.0 kg per tonne of crude ore.

**5.** The use of the flotation composition as claimed in claim 1 and/or 2 in the flotation of nonferrous sulfide ores, the sulfide ore being copper sulfide, nickel sulfide, zinc sulfide, lead sulfide or molybdenum sulfide.

**6.** A process for preparing compounds of the formula

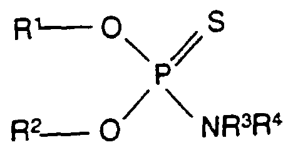

where
$R^1$, $R^2$ and $R^3$ independently of one another are alkyl groups having 1 to 18 carbon atoms, alkenyl groups having 2 to 18 carbon atoms, aryl groups having 6 to 10 carbon atoms, or alkylaryl groups having 7 to 10 carbon atoms, and $R^4$ is hydrogen or alkyl groups having 1 to 18 carbon atoms, alkenyl groups having 2 to 18 carbon atoms, aryl groups having 6 to 10 carbon atoms, or alkylaryl groups having 7 to 10 carbon atoms, which comprises

a) reacting a dithiophosphate of the formula $(R^1O)(R^2O)PS_2Me$, where Me is a cation, with an oxidizing agent in acidic solution and then

b) reacting the resultant product with an amine of the formula $HNR^3R^4$.

**7.** The process as claimed in claim 6, wherein $R^1$, $R^2$ and $R^3$ independently of one another are $C_2$-$C_4$-alkyl groups.

**8.** The process as claimed in claim 7, wherein $R^1$ and $R^2$ are a butyl group, $R^3$ is an ethyl group and $R^4$ is hydrogen.

**9.** The process as claimed in claim 8, wherein $R^1$ and $R^2$ are an isobutyl group.

**Revendications**

**1.** Utilisation d'un agent pour la flottation de minerais sulfurés, contenant au moins un composé de formule

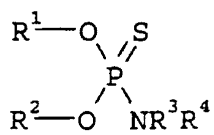

dans laquelle
$R^1$, $R^2$ et $R^3$ représentent indépendamment les uns des autres des groupes alkyle ayant 1 à 18 atomes de carbone, des groupes alcényle ayant 2 à 18 atomes de carbone, des groupes aryle ayant 6 à 10 atomes de carbone ou des groupes alkylaryle ayant 7 à 10 atomes de carbone, et
$R^4$ est un atome d'hydrogène ou un groupe alkyle ayant 1 à 18 atomes de carbone, un groupe alcényle ayant 2 à 18 atomes de carbone, un groupe aryle ayant 6 à 10 atomes de carbone ou un groupe alkylaryle ayant 7 à 10 atomes de carbone.

**2.** Utilisation de l'agent de flottation selon la revendication 1, où $R^1$, $R^2$ et $R^3$ représentent indépendamment les uns des autres des groupes alkyle en $C_2$ à $C_4$.

**3.** Utilisation de l'agent de flottation selon les revendications 1 et/ou 2 sur une plage de pH de 2 à 12.

**4.** Utilisation de l'agent de flottation selon les revendications 1 et/ou 2 en des quantités de 0,001 à 1,0 kg par tonne de minerai brut.

**5.** Utilisation de l'agent de flottation selon les revendications 1 et/ou 2 lors de la flottation de minerai sulfuré non ferreux, le minerai sulfuré étant le sulfure de cuivre, le sulfure de nickel, le sulfure de zinc, le sulfure de plomb ou le sulfure de molybdène.

**6.** Procédé de préparation de composés de formule

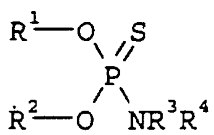

dans laquelle

$R^1$, $R^2$ et $R^3$ représentent indépendamment les uns des autres des groupes alkyle ayant 1 à 18 atomes de carbone, des groupes alcényle ayant 2 à 18 atomes de carbone, des groupes aryle ayant 6 à 10 atomes de carbone ou des groupes alkylaryle ayant 7 à 10 atomes de carbone, et

$R^4$ est un atome d'hydrogène ou un groupe alkyle ayant 1 à 18 atomes de carbone, un groupe alcényle ayant 2 à 18 atomes de carbone, un groupe aryle ayant 6 à 10 atomes de carbone ou un groupe alkylaryle ayant 7 à 10 atomes de carbone,

par

a) réaction d'un dithiophosphate de formule $(R^1O)(R^2O)PS_2Me$ dans laquelle Me est un cation, avec un oxydant en solution acide, puis

b) réaction du produit ainsi obtenu avec une amine de formule $HNR^3R^4$.

**7.** Procédé selon la revendication 6, dans lequel $R^1$, $R^2$ et $R^3$ représentent indépendamment les uns des autres des groupes alkyle en $C_2$ à $C_4$.

**8.** Procédé selon la revendication 7, dans lequel $R^1$ et $R^2$ sont chacun un radical butyle, $R^3$ est un radical éthyle et $R^4$ est un atome d'hydrogène.

**9.** Procédé selon la revendication 8, dans lequel $R^1$ et $R^2$ sont chacun un radical isobutyle.